# EUROPEAN PATENT APPLICATION

(11) **EP 4 803 267 A1**
(43) Date of publication of application: **09.09.2026**
(21) Application number: 25382195.3
(22) Date of filing: 04.03.2025
(51) Int. Cl.: B25J 9/16, B25J 13/00, G06F 3/01

(54) **SYSTEM COMPRISING A CONTROLLABLE DEVICE AND ONE OR MORE MEASURING DEVICES**

(71) Applicant: Fundación Tecnalia Research & Innovation, 48160 Derio - Bizkaia (ES)
(72) Inventor: BASTIDA MERINO, Leire, 48160 Derio, Bizkaia (ES); SILLAURREN LANDABURU, Sara, 48160 Derio, Bizkaia (ES); LOIZAGA GARMENDIA, Erlantz, 48160 Derio, Bizkaia (ES); MOYA CAÑAS, Ana, 48160 Derio, Bizkaia (ES); TOME HIERRO, Eneko, 48160 Derio, Bizkaia (ES)
(74) Representative: Balder IP Law, S.L.

(57) **Abstract**

The invention relates to a system (1) comprising:
- a controllable device (11) comprising an actuator;
- one or more measuring devices (2, 3, 4) configured to measure parameters of a person when the person is in a space shared with the controllable device, the one or more measuring devices comprising at least one of:
• one or more physiological sensors (2),
• one or more imaging devices (3) for taking images of the person, and
• one or more microphones (4) for measuring voice of the person;

- one or more processing devices (6); and
wherein:
- the one or more measuring devices (2, 3, 4) are communicatively coupled with the one or more processing devices (6) and are configured to send the measurements to the one or more processing devices (6); and
wherein the one or more processing devices (6) are configured to process the measurements to generate a signal (12) to actuate the actuator (11) based on the measurements

## Description

### TECHNICAL FIELD

The present invention is encompassed within the field of systems comprising controllable devices. More specifically, in the field of systems comprising sensors wherein the system is configured to control the controllable device based on measurements of sensors.

### BACKGROUND

Collaborative robots are examples of controllable devices. Collaborative robots, commonly known as cobots, are for direct human-robot interaction in a space shared by the cobot and a person. A cobot may be configured to perform an operation in the shared space. For example, cobots are used in a manufacturing process, more specifically, cobots may be configured to execute a manufacturing operation in the shared space, for example, to move a workpiece to/out of the shared space and/or to process the workpiece in the shared space. The cobot may be configured to move at least a portion of the cobot in the shared space. In the context of use of cobots for manufacturing, the person sharing the space with the cobot may be an operator of the factory, for example, an operator working in the same manufacturing line as the cobot.

Using measurements of sensors to control operation of a cobot is known in the art. For example, DE 102017221305 A1 discloses that a camera and/or a LIDAR may be worn in the head of a person who interacts with the cobot. The camera and/or LIDAR may provide information about position of a limb of the person. The cobot may be controlled based on the information of the position of the limb.

It is desirable to optimize interaction between people and controllable devices (e.g., cobots) in the shared space. More specifically, it is desirable to increase safety, both for the controllable device and for the person, in the shared space. It is also of interest to increase adaptability of the controllable device to different environments (e.g., to different manufacturing processes) and increase efficiency of interaction between controllable device and human in the shared space (e.g., to increase the number of workpieces processed and/or moved by a cobot and the human). It is also desirable to increase speed of response of the controllable device to sensor measurements.

### SUMMARY

A first aspect of the disclosure relates to a system comprising:
- a controllable device comprising an actuator (e.g., an actuator configured to move the controllable device);
- one or more measuring devices configured to measure parameters of a person when the person is in a space shared with the controllable device, the one or more measuring devices comprising at least one of:
   - one or more physiological sensors,
   - one or more imaging devices for taking images of the person, and
   - one or more microphones for measuring voice of the person;
- one or more processing devices; and
wherein:
- the one or more measuring devices are communicatively coupled with the one or more processing devices and are configured to send the measurements to the one or more processing devices; and
wherein the one or more processing devices are configured to process the measurements to generate a signal to actuate the actuator based on the measurements.

In some embodiments, the one or more processing devices are configured to process the measurements using determined algorithms and/or machine learning models to generate a control signal configured to adjust the actuator's operation. The actuation signal is configured to modify features of the controllable device, for example, movement speed, trajectory, force, and/or interaction mode based on human physiological, visual, and vocal cues (e.g., based on real-time human physiological, visual, and vocal cues).

In some embodiments, the one or more processing devices are configured to process the measurements in real time to generate a signal to actuate the actuator based on the measurements. Thereby, the signal to actuate the actuator is generated more quickly.

In some embodiments, the controllable device is: a collaborative robot, a prosthetic device, a haptic interface, or another system.

The collaborative robot is commonly known as "cobot".

In some embodiments, the cobot is configured to process and/or move a workpiece in a manufacturing process, and the person is an operator involved in the manufacturing process. The cobot and the operator may work in the same processing/manufacturing line.

In some embodiments, the cobot may be configured to process and/or move the workpieces which are also processed by the operator. For example, the operator may process a workpiece and then the workpiece is processed in the shared space by the cobot and/or moved within/out of the shared space by the cobot. Viceversa, the cobot may process the workpiece in the shared space and/or move the workpiece to/within the shared space, and then the operator may process the workpiece. The workpiece may be in the shared space while being processed by the operator.

In some embodiments, the operator and the cobot may perform the same manufacturing operation in parallel. In this way some of the workpieces are processed by the operator and other workpieces are processed by the cobot at the same time.

In some embodiments, the cobot comprises a robotic arm. For example, the cobot is a robotic arm.

The one or more measuring devices comprise at least one of one or more physiological sensors, one or more imaging devices, and one or more microphones to capture human state indicators, preferably, real-time human state indicators. The combination of these one or more measuring devices enables adaptive control by dynamically adjusting movement speed of the controllable device, operational mode, and/or proximity to the person, improving safety, efficiency, and ergonomic interaction.

In some embodiments, the one or more measuring devices comprise: one or more physiological sensors, one or more imaging devices for taking images of the person and one or more microphones for measuring voice of the person. Using said one or more measuring devices in a same system is advantageous for measuring different parameters which can be combined in the processing by the one or more processing devices, so that the estimation of the state of the person is enhanced.

In some embodiments, the one or more measuring devices further comprise at least one of: an environmental sensor (e.g., a temperature sensor for measuring temperature of the shared space), a tactile sensor, a force sensor, a radar sensor, an ultrasonic sensor, a LiDAR sensor, and any other sensor capable of capturing parameters relevant to the state of the person or the shared space.

The fact that the one or more measuring devices are configured to measure parameters of the person when the person is in the shared space does not necessarily mean that measurements are not taken also when the person is outside of the shared space. Although in some embodiments, to save energy consumed by the one or more measuring devices, the one or more measuring devices may be configured to take measurements only when the person is in the shared space. For example, the system may comprise a presence sensor configured to determine whether a person is in the shared space, and the system may be configured to activate the one or more measuring devices if presence of the person is detected, and to deactivate the one or more measuring devices if presence of the person is not detected.

The one or more imaging devices are outside of the body of the person to capture images of the exterior part of the body of the person.

In some embodiments, the one or more imaging devices comprise at least one camera, for example, at least one RGB camera, at least one thermal camera, at least one infrared camera, at least one depth camera, and/or other imaging devices capable of capturing visual information.

In some embodiments, the one or more imaging devices are configured to take images of the person for estimating a position of body members (e.g., position of at least one arm and/or of at least one leg) of the person and for estimating facial expressions of the person.

Methods known in the art to estimate a position of body members (e.g., of torso, arms, hands, legs and/or feet) based on one or more images of the person can be used to estimate the position of one or more body members of the person. A result of such processing is position of the respective body member(s).

Methods known in the art to estimate facial expressions (e.g., smiling or angry expression) based on images of the face can be used to estimate the facial expression.

Information regarding the position of one or more body members of the person is useful to determine whether the person is at an appropriate distance from the controllable device (e.g., the cobot). For example, to determine whether the person is too close to the controllable device so that the controllable device may undesirably hit the person, and/or the person is too far from the controllable device so that the controllable device does not appropriately interact with the person. If the person is too close to the controllable device, the controllable device may be actuated so that the controllable device moves away from the person. If the controllable device is too far from the person, the controllable device may be actuated to approach the person.

Information regarding the expression of the face has been found useful to estimate how the person feels and to operate the controllable device accordingly. For example, if the person looks tired or angry, and hence less focused on the task at hand and more prone to errors, the controllable device may be actuated to operate at a longer distance from the person and/or at a lower speed to decrease the risk that the controllable device harms the person.

In some embodiments, the one or more imaging devices are arranged in fixed positions, thus allowing consistent data acquisition. Alternatively or additionally, dynamically repositionable imaging devices (e.g., wearable imaging devices) may be used to ensure adaptive tracking of human movement in variable environments.

In some embodiments, the one or more imagining devices are configured to take images of the pupil of the person for estimating pupil size and/or pupil reactivity. Estimating a pupil size of the person is useful to increase accuracy of estimations of a state of the person (e.g., increased pupil size may be indicative of increased cognitive demand of the person).

In some embodiments, the same image of the person is used for different purposes. For example, the same image is used for estimating position of one or more body members of the person, a facial expression of the person and pupil size/reactivity of the person. Using the same image for different purposes allows decreasing the amount of images required at the cost of increasing resolution of the image to observe, clearly enough and in a same image, position of the one or more body members, size of the pupil and the facial expression.

In some embodiments, different images of the person are taken for different purposes. For example, an image is taken for estimating position of one or more body members of a person, and another image is taken for estimating a facial expression of the person and/or for estimating a pupil size/pupil reactivity of the person. For example, an imaging device may be configured to take images of the face of the person, and another imaging device may be configured to take images of at least some limbs and/or the torso of the person (e.g., of the whole body) of the person. Thereby, position and configuration of each imaging device may be optimized for capturing an image of different body portions. The imaging device configured to capture an image of a face may decrease the image resolution needed to capture details of the face by increasing the size of the area occupied by the face in the captured 2D image (i.e., by using more pixels per area unit of the face in the image) with respect to the size of the face as captured by the imaging device configured to take 2D images of at least some limbs of the person.

In some embodiments, the one or more imaging devices are integrated into wearable devices, such as eye-tracking glasses or head-mounted cameras. These wearable imaging devices enable dynamic and continuous monitoring of the person's pupil size and/or reactivity, facial expressions, and other relevant parameters, even while the person is moving. This approach complements fixed imaging devices by allowing close-range and perspective-consistent image acquisition, which can enhance accuracy in detecting cognitive and physiological states.

Voice measurements have been found advantageous for estimating a cognitive and/or emotional state of a person with a lower degree of invasiveness than other wearable devices. In addition, voice is a natural and continuous channel of communication which is frequently used in human tasks, so that voice is readily available in many environments where controllable devices are present. Analysis of voice measurements, which may be performed by one or more processing devices, comprises frequency spectrum (e.g., pitch variations), temporal features (e.g., speech rate and pause duration), and spectral envelope characteristics (e.g., harmonic-to-noise ratio), allowing identification of stress, fatigue, or cognitive engagement levels.

In some embodiments, the physiological sensors are configured to measure parameters of the person associated with human emotions and/or human psychology (e.g., heart rate, breath rate, galvanic response of skin, body temperature and/or brain waves). This type of sensors is known in the art as psychophysiological sensors.

In some embodiments, the one or more physiological sensors are configured to measure at least one of: a breathing parameter of the person, electrical activity of the brain of the person, an electrical parameter of skin of the person, temperature of a body member of the person and electrical activity of skeletal muscles of the person. These physiological parameters have been found useful to estimate states of the person to actuate the controllable device accordingly.

In some embodiments, the measurement of the electrical activity of the brain of the person is an electrogram, and the measuring device for obtaining the electrogram is configured to obtain the electrogram by electroencephalography (i.e., EEG).

In some embodiments, the electrical parameter of skin of the person is a measurement of galvanic skin response (i.e., GSR).

In some embodiments, the measurement of galvanic skin response is a measurement of electrical resistance of the skin and/or of electrical conductance of the skin. Changes in electrical resistance/conductance of skin can be indicative of emotional activation or stress levels over time, as well as immediate responses to external stimuli.

In some embodiments, the measurement of electrical activity of skeletal muscles of the person is a measurement of electromyography (i.e., EMG).

In some embodiments, the one or more physiological sensors are configured to measure: a breathing parameter of the person, electrical activity of the brain of the person, an electrical parameter of skin of the person and electrical activity of skeletal muscles of the person. This combination of different physiological parameters has been found further advantageous for estimating states of the person and for actuating the controllable device accordingly.

In some embodiments, the one or more physiological sensors are configured to be worn by the person for taking the measurements. Thereby, the one or more physiological sensors take the measurements while being worn by the person.

In some embodiments, the one or more physiological sensors comprise at least one of:
- a sensor configured to be worn in a hand palm of the person for measuring an electrical parameter of the skin (e.g., measurement of GSR); and
- a sensor configured to be worn in a scalp of the person for measuring electrical activity of the brain of the person (e.g., measurement of EEG).

Placing in the hand palm the sensor for measuring an electrical parameter of the skin, and more particularly for taking a measurement of GSR, allows enhancing accuracy of measurement of an electrical parameter of the skin compared to if the sensor is placed in another position of the body.

Placing in the scalp the sensor for measuring electrical activity of the brain, and more specifically for taking measurement of EEG, allows enhancing accuracy of measurement of electrical activity of the brain compared to if the sensor is placed in another position of the body.

Parameters of the controllable device (e.g., the cobot), for example, positions of portions of the controllable device and/or movement speed of portions of the controllable device may be estimated, by one or more processing devices, based on measurements taken by one or more measuring devices, and/or based on actuation signals of the controllable device and on an initial state of the controllable device. The one or more measuring devices for taking measurements of the controllable device may comprise the one or more imaging devices for taking images of the person, and/or additional measuring devices. The estimation based on the actuation signals and the initial state of the controllable device may be calculated by summing, by the one or more processing devices, the effect of the actuation signal to the initial state of the controllable device, the initial state of the controllable device being the state at which the controllable device is just before the actuation signal is executed (i.e., just before the controllable device is actuated according to the actuation signal). For example, if an actuation signal is for moving (-3, 0, 0) a portion of the controllable device, and the initial position of the portion of the controllable device is (1, 1, 1), then the position of the portion of the controllable device after completing the actuation will be (-2, 1, 1).

The communicative coupling between the one or more measuring devices and the one or more processing devices may be wired or wireless. If at least one sensor of the one or more physiological sensors is worn by an operator, the communicative coupling between the worn physiological sensor(s) and the one or more processing devices is preferably wireless. Thereby, cables of a wired communication do not hinder freedom of movement of the operator.

In some embodiments, the controllable device and the one or more measuring devices are in the same premises, and the one or more processing devices are in the same premises and/or in the cloud. Placing the one or more processing devices, the controllable device and the one or more measuring devices in the same premises allows increasing speed of communication among said devices compared to if the devices are located farther away from each other (e.g., compared to if the one or more processing devices are in the cloud), thus contributing to quicker actuation of the controllable device. For similar advantages, if the one or more processing devices are in the cloud it is advantageous to have a receiver for receiving measurements from the one or more measuring devices and a transmitter transmitting the received measurements to the cloud in the same premises. The receiver and the transmitter may form part of a same device (e.g., a router).

In some embodiments, the one or more processing devices and the one or more measuring devices are in a vicinity of the shared space. Additionally decreasing a distance between the one or more processing devices, the one or more measuring devices and the controllable device allows decreasing the risk of interferences in communication (particularly if the communication is wireless) among said components of the system because the strength of signals received is higher compared to if said components are farther from each other. More specifically, the premises may comprise additional devices which wirelessly communicate, and wherein said wireless communication may undesirably interfere with the communication among the controllable device, the one or more measuring devices, and the one or more processing devices. For similar advantages, if the one or more processing devices are in the cloud instead of in the vicinity of the shared space, it is advantageous to have a receiver for receiving measurements from the one or more measuring devices and a transmitter transmitting the received measurements to the cloud in the vicinity of the shared space.

Processing, by the one or more processing devices, the measurements of the person taken by the one or more measuring devices, preferably in real-time, allows dynamic adaptation of the controllable device's actions. The system allows minimizing processing latency through optimized data pipelines, thus allowing ensuring responses within milliseconds to maintain seamless interaction and prevent hazardous situations.

The one or more processing devices may be configured to iteratively process the measurements to obtain actuation signals which adapt actuation of the controllable device to the state of the person at different times/time intervals. To take into account the state of the controllable device, the processing may comprise processing of actuation signals of the controllable device, initial state of the controllable device and/or measurements of the controllable device taken by one or more measuring devices and sent to the one or more processing devices via a communication coupling.

In some embodiments, the system is configured to select the parameters on which measurements the generation of the actuation signal is based, wherein the selected parameters may correspond to any subset of the available parameters measurable with the one or more measuring devices; preferably wherein the parameter selection is based on a selection of a state of a person to be estimated and said estimation is used in the generation of the actuation signal.

Thereby, the system (e.g., the one or more processing devices) selects the parameters, and the one or more processing devices determine/calculate the actuation signal based on measurements of only the selected parameters.

In some embodiments, the system comprises an intermediate module (e.g., a hardware and/or software module) configured to:
- receive measurements signals from the one or more measuring devices, the measurements signals comprising the measurements taken by the one or more measuring devices,
- preprocess the received measurements signals, and
- send the preprocessed measurements signals to the one or more processing devices; wherein the intermediate module comprises modular adapters, each modular adapter being associated with a different measuring device and being configured to preprocess the measurements signals of the associated measuring device.

The modular adapters are readily configured to be used in/together with the one or more processing devices, so that additional measuring devices can be added to the system in an easy manner. Each modular adapter depends on the measuring device with which the modular adapter is associated (i.e., the modular adapter of different measuring devices may be different) and acts as an interface between the measuring device and the subsequent estimation of person state/classification of measurements/features based on measurements of the measuring device.

Thereby, the one or more processing devices are communicatively coupled with the one or more measuring devices via an intermediate module which receives and preprocesses the measurements signals, and which, thanks to the modular feature, facilitates using additional measuring devices in the system, and adapting the one or more measuring devices used in the system to the particular needs of the human-controllable device interaction.

Each adapter is associated with a different measuring device, so that each adapter does not process the signals sent by measuring devices associated with a different adapter. For example, there may be an adapter for each different measuring device: an adapter for each/all imaging devices, a further adapter for each physiological sensor and a further adapter for each/all microphone(s). More particularly, the system may comprise an adapter for an imaging device, another adapter for another imaging device, another adapter for the measuring device comprising the sensor configured to measure a breathing parameter, another adapter for the measuring device comprising the sensor configured to measure electrical activity of the brain of the person, another adapter for the measuring device comprising the sensor configured to measure an electrical parameter of skin of the person, another adapter for the measuring device comprising the sensor configured to measure electrical activity of skeletal muscles of the person and another adapter for the one or more microphones.

Performing the preprocessing in different adapters allows performing the preprocessing in parallel, so that the signals are quickly adapted to their subsequent processing in the one or more processing devices.

In some embodiments, the intermediate module is in the same premises as the controllable device and as the one or more measuring devices, for example, is in the vicinity of the shared space. As explained above, arranging said components closer to each other allows increasing strength of signal received in the communication of said components, increasing speed of communication, particularly if the communication is wireless, and increasing processing speed.

In some embodiments, the preprocessing comprises at least one of:
- assigning a time to each measurement of the measurements signals, the time being indicative of the time at which the respective measurement was taken by the respective measuring device, and the time being relative to a time reference shared by the adapters;
- reducing noise of the measurements signals; and
- normalizing the measurements comprised in the measurements signals.

Each measuring device may be configured to send its measurement signal upon capturing/taking the respective measurement, so that the measurement signal is quickly received by the intermediate module.

Measurements signals sent by the one or more measuring devices may lack an indication of the time at which the measurement was captured or may comprise a time relative to different time references depending on the measurement device which has generated the measurement signal.

To perform time synchronization of the measurements, the intermediate module (i.e., the respective adapter) may assign a time to each one of the received measurements, wherein all the assigned times are relative to a same time reference. For example, the assigned time may be calculated based on the time at which the measurement signal is received by the intermediate module and an expected latency between the capture of the measurement by the measuring device and the reception of the measurement signal by the intermediate module. In another example, the time assigned by the intermediate module may be calculated by adjusting the time assigned by the measuring device to be relative to the time reference of the intermediate modules. By assigning a time to each measurement, wherein all the assigned times refer to a same time reference, the system is capable of determining which measurements reflect a state of the person in a same time interval. The narrower the time interval, the smaller the probability that the measurements of the same time interval refer to different states of the person.

The controllable device may be configured to base the determination of the actuation signal only on measurements of a same time interval (i.e., assigned a time within the time interval), and to determine, for each additional time interval a further actuation signal.

The reduction of signal noise may be performed by using methods known in the art.

The normalization of measurements may be performed by using methods known in the art. Thereby, the measurements are in a same or similar scale, which allows decreasing impact of extreme measurement values and facilitates their subsequent processing.

In some embodiments, the measurements of the one or more measuring devices are normalized to be between zero and one.

In some embodiments, the measurements are normalized to have a mean (e.g., arithmetic mean) of zero and a standard deviation of one.

In some embodiments, the one or more processing devices are configured to determine features of the measurements received by the one or more processing devices, preferably wherein the determined features comprise power in determined bands of electroencephalography measurements.

For example, the power in determined bands may be at least one of: power in the tetha band (e.g., 4 - 8 Hz), power in the alpha band (e.g., 8 - 13 Hz), power in the SMR band (e.g., 13 - 15 Hz), power in the Beta band (e.g., 13 - 30 Hz) and power in the Gamma band (e.g., 30 - 80 Hz).

The features may be determined by performing time, frequency, and/or time-frequency analysis of the preprocessed measurements signals.

In some embodiments, the features of the face images comprise positions of determined face parts (e.g., eyebrows and/or lips), the positions being indicative of emotions and/or facial tension.

In some embodiments, the features of the face images comprise detection of quick facial movements in the images, the movements being indicative of emotions (e.g., happiness, frustration and/or surprise).

In some embodiments, the features of the body images comprise detection of body posture. The body posture is indicative of degree of confidence/fatigue/discouragement. For example, an upright posture is indicative of confidence, whereas a stooped posture is indicative of fatigue/discouragement.

In some embodiments, the features of the measurements of the physiological sensors comprise at least one of:
- variation of heart rate, which measures fluctuation in intervals between consecutive heartbeats (RR intervals), and is indicative of balance between the sympathetic nervous system and the parasympathetic nervous system; and
- average heart rate (e.g., average number of heartbeats per minute), which is indicative of degree of stress/relaxation.

In some embodiments, the features of the measurements of the physiological sensors comprise at least one of:
- breath rate (e.g., number of breaths per minute), which is indicative of state of tranquility (slow breathing) or stress (quick breathing); and
- degree of depth and regularity of breathing, which relates to the volume of inspired and exhaled air, as well as to the degree of uniformity of breath rate.

In some embodiments, the features of the measurements of electrical activity of the brain comprise at least one of:
- power of theta waves (e.g., 4-8 Hz), which is indicative of degree of relaxation and cognitive burden,
- power of alpha waves (e.g., 8-13 Hz), which is indicative of degree of tranquility and alert,
- power of beta waves (e.g., 13-30 Hz), which is indicative of degree of concentration and mental activity, and
- power of gamma waves (e.g., 30-80 Hz), which is indicative of complex cognitive processes and attention.

In some embodiments, the features of the measurements of electrical activity of the brain comprise measurements of synchronization degree between brain regions. For example, measurements of frequency correlation. As an example, greater coherency between the frontal lobe and the parietal lobe is indicative of better neuronal communication in cognitive tasks.

In some embodiments, the features of the measurements of electrical activity of the brain comprise measurements of variations of a magnitude (e.g., amplitude and/or phase) of brain waves, which reflect changes of mental state.

In some embodiments, the features of the measurements of voice comprise fundamental frequency of voice (e.g., pitch). A greater fundamental frequency is indicative of greater stress whereas a lower fundamental frequency is indicative of more tranquility.

In some embodiments, the features of the measurements of voice comprise variations of voice tones. Greater fluctuations of voice tones are indicative of greater stress and/or frustration.

In some embodiments, the features of the measurements of voice comprise voice volume. Greater voice volume is indicative of greater confidence, whereas lower voice volume is indicative of fatigue and/or a state of reflecting.

In some embodiments, the features of the measurements of voice comprise timbre of voice. Harmonic features of the voice are useful for identifying emotions (e.g., happiness and/or sadness).

In some embodiments, the features of the measurements of voice comprise speed of speech. Greater speed of speech is indicative of greater anxiety, whereas lower speed of speech is indicative of more fatigue.

In some embodiments, the features of the measurements of voice comprise duration of speech pauses. Greater duration of speech pauses is indicative of fatigue and/or reflecting states.

In some embodiments, the one or more processing devices are configured to use a neural network comprising transformer blocks in series to process a combination of the measurements (e.g., the preprocessed signals) to infer a state of the person; and wherein the signal to actuate the controllable device is generated, by the one or more processing devices, based on the output of the neural network (e.g. adjust the speed or movement trajectory of the controllable device to avoid collisions or interferences with the human, change the configuration of tools or accessories of the controllable device to adapt to human needs, provide feedback or alerts when detecting potential risks). For example, the one or more processing devices are configured to use a neural network comprising transformer blocks in series to analyze multimodal inputs (physiological signals, images and voice data). The neural network learns feature representations of human states and applies temporal attention mechanisms to account for past states, improving predictive accuracy. The generated actuation signal dynamically adjusts the controllable device's interaction parameters, ensuring human-adaptive behavior.

Optionally, a combination of the measurements and of one or more states of the person are processed by the neural network to infer the state of the person. Thereby, states of the same person (e.g., previous states of the same person) are considered by the neural network to estimate a subsequent state of the person.

Thereby, the neural network processes the measurements without requiring a previous classification of the measurements, so that the quality of the output of the neural network does not depend on the quality of said classifiers. A neural network which processes the measurements instead of the classification of the measurements allows producing more accurate estimations of the state of the person because information is not lost by assigning a state to different measurements. However, a neural network which processes the measurements instead classifications of the measurements requires greater processing resources and more data to achieve appropriate model robustness.

In some embodiments, the one or more processing devices are configured to classify the measurements (e.g., the features), preferably wherein measurements of each parameter are classified independently from the rest of the parameters. More specifically, the classification may be based on the determined features, for example, on the determined features associated with measurements assigned to a same time interval.

The classification may be performed by using, for example, support vector machine, random forest and/or convolutional neural network.

In some embodiments, the one or more processing devices are configured to classify features of images of the face of the person independently from measurements of measuring devices different than imaging devices and independently from images of parts of the body different than a face.

In some embodiments, the one or more processing devices are configured to classify features of images of the body of the person independently from measurements of measuring devices different than imaging devices and independently from images of parts of the body different than body members (e.g., of torso, arms, hands, legs and/or feet).

In some embodiments, the one or more processing devices are configured to classify features of voice measurements taken by the microphones independently from measurements different than voice measurements taken by the microphones.

In some embodiments, the one or more processing devices are configured to classify features of measurements of electrical parameter(s) of skin independently from measurements different than measurements of electrical parameter(s) of skin.

In some embodiments, the one or more processing devices are configured to classify features of measurements of heart rate independently from measurements different than measurements of heart rate.

In some embodiments, the one or more processing devices are configured to classify features of measurements of breath independently from measurements different than measurements of breath.

In some embodiments, the one or more processing devices are configured to classify features of measurements of electrical activity of the brain independently from measurements different than measurements of electrical activity of the brain.

In some embodiments, the one or more processing devices are configured to classify features of images of eyes independently from measurements different than images of eyes.

In some embodiments, the one or more processing devices are configured to use a neural network comprising transformer blocks in series to process a combination of the classifications of the measurements to infer a state of the person; and wherein the signal to actuate the controllable device is generated, by the one or more processing devices, based on the output of the neural network.

In some embodiments, the one or more processing devices are configured to classify the independent classification of the measurements of several parameters into a degree and/or type of state a person.

Examples of states of the person are: degree of confidence, degree of stress, degree of attention, degree of cognitive burden, emotion (e.g., happiness, anger or fear) and degree of fatigue. Examples of relationships between measurements and states of person are disclosed in E. Loizaga, A. T. Eyam, L. Bastida and J. I. M. Lastra, "A Comprehensive Study of Human Factors, Sensory Principles, and Commercial Solutions for Future Human-Centered Working Operations in Industry 5.0," in IEEE Access, vol. 11, pp. 53806-53829, 2023, doi: 10.1109/ACCESS.2023.3280071.

### Degree of confidence

In some embodiments, the degree of confidence is based on independent classifications of facial expression, body posture and voice tone.

In some embodiments, the one or more processing devices are configured to classify at least one of the following features into, for example, one of several facial expressions (the classification being independent from measurements of measuring devices different than imaging devices and from images different than images of a face):
- distance between parts of a face (e.g., between eyebrows and/or between lips),
- detection of micro expressions in the face, for example, muscle tension (e.g., smiles), and
- eye opening ratio, which is indicative of degree of attention and/or relaxation.

In some embodiments, the one or more processing devices are configured to classify at least one of the following features into, for example, one of several body postures (the classification being independent from measurements of measuring devices different than imaging devices and from images different than images of body members involved in the classification):
- angle of inclination of torso,
- movement amplitude of arms, and
- degree of stability of posture, which is indicative of confidence degree.

In some embodiments, the one or more processing devices are configured to classify at least one of the following features into, for example, one of several voice tones (the classification being independent from measurements different than voice measurements):
- fundamental frequency of voice (e.g., pitch),
- degree of variation of the fundamental frequency (e.g., of the pitch), which is indicative of emotional control, and
- vocal energy (i.e., average amplitude of sound).

### Degree of stress

In some embodiments, the degree of stress is based on independent classifications of facial galvanic skin response, heart rate and breath rate.

In some embodiments, the one or more processing devices are configured to classify at least one of the following features into, for example, one of several galvanic skin responses (the classification being independent from measurements different than measurements of electrical parameter(s) of skin):
- mean amplitude of electrical conductance of skin,
- change rate of electrical conductance of skin, which is indicative of a quick response to stress, and
- duration of peaks of electrical conductance.

In some embodiments, the one or more processing devices are configured to classify at least one of the following features into, for example, a type of heart rate (the classification being independent from measurements different than heart-related measurements):
- degree of variation of heart rate,
- maximum peak of heart rate, and
- time between heartbeats (e.g., RR intervals).

In some embodiments, the one or more processing devices are configured to classify at least one of the following features into, for example, a type of breath rate (the classification being independent from measurements different than measurements of breath):
- average breath rate,
- degree of variation of breath depth, and
- duration of pauses between breaths.

### Degree of attention

In some embodiments, the degree of attention is based on independent classifications of electroencephalography activity, eye tracking and body posture.

In some embodiments, the one or more processing devices are configured to classify at least one of the following features into, for example, a type of electroencephalography activity (the classification being independent from measurements different than measurements of electrical activity of the brain):
- power of beta waves (e.g., 13-20 Hz), which is indicative of degree of concentration,
- index of coherence between brain regions (e.g., between the parietal lobe and the frontal lobe), and
- degree of changes of relationship between alpha waves and beta waves.

In some embodiments, the one or more processing devices are configured to classify at least one of the following features into, for example, a type of eye tracking (the classification being independent from measurements different than images of eyes):
- duration of view fixations, which is indicative of focus of the view,
- number and amplitude of saccades, which are indicative of visual exploration, and
- degree of variation of pupil size.

In some embodiments, the one or more processing devices are configured to classify at least one of the following features into, for example, one of several body postures (the classification being independent from measurements of measuring devices different than imaging devices and from images different than images of the body members):
- torso stability,
- sudden changes of head inclination, and
- repetitive movements (e.g. rocking), which are indicative of distraction.

### Degree of cognitive burden

In some embodiments, the degree of cognitive burden is based on independent classifications of electroencephalography activity, heart rate and breathing patterns.

In some embodiments, the one or more processing devices are configured to classify at least one of the following features into, for example, a type of electroencephalography activity across neural regions (the classification being independent from measurements different than measurements of electrical activity of the brain):
- power of theta waves (e.g., 4-8 Hz), which is indicative of degree of cognitive burden,
- power of alpha waves (e.g., 8-13 Hz), which is indicative of complexity of cognitive burden (more specifically, greater power is indicative of smaller complexity of cognitive burden), and
- relationship between theta and alpha waves, which is indicative of mental effort.

In some embodiments, the one or more processing devices are configured to classify at least one of the following features into, for example, a type of heart rate (the classification being independent from measurements different than measurements of heart rate):
- degree of variation of heart rate, which is indicative of cognitive stress,
- average heart rate, and
- sudden accelerations of heart rate, which are indicative of complex cognitive tasks.

In some embodiments, the one or more processing devices are configured to classify at least one of the following features into, for example, a breathing pattern (the classification being independent from measurements different than measurements of breath):
- degree of shallowness of breath and/or of breath gasping,
- degree of regularity of breath rate (a greater degree of irregularity of breath rate is indictive of more intense cognitive tasks), and
- duration of exhalation (a greater duration of exhalation is indicative of greater relaxation).

### Emotion

In some embodiments, the emotion is based on independent classifications of psycho-physiological signals (e.g. EEG, GSR), facial expressions, tone of voice, and body posture and gestures.

In some embodiments, the one or more processing devices are configured to classify at least one of the following features into, for example, one of several facial expressions (the classification being independent from measurements of measuring devices different than imaging devices and from images different than images of the face):
- detection of basic emotions by means of action units of the face,
- degree of contraction of specific muscles of the face (e.g., of orbicularis oculi for detecting smiles)
- degree of facial asymmetry (greater degree of facial asymmetry is indicative of negative emotions).

In some embodiments, the one or more processing devices are configured to classify at least one of the following features into, for example, one of several voice tones (independently from measurements different than voice measurements):
- degree of variation of vocal energy, which is indicative of the degree of excitation/tranquility,
- degree of fundamental frequency (e.g., of the pitch), which is indicative of intensity of emotion (e.g., a greater fundamental frequency is indicative of more intense emotion), and
- duration of pauses in speech.

In some embodiments, the one or more processing devices are configured to classify at least one of the following features into, for example, one of several body postures and gestures (the classification being independent from measurements of measuring devices different than imaging devices and from images different than images of the body members):
- amplitude of body movements,
- speed of change of body posture (a greater speed of change of body posture is indicative of more intense emotion), and
- gesture speed.

### Degree of fatigue

In some embodiments, the emotion is based on independent classifications of electroencephalography activity, blinking and eye movement, and body posture.

In some embodiments, the one or more processing devices are configured to classify at least one of the following features into, for example, a type of electroencephalography activity (the classification being independent from measurements different than measurements of electrical activity of the brain):
- power increase of theta waves (e.g., 4-8 Hz), which is indicative of degree of drowsiness,
- power increase of delta waves (e.g., 0.5-4 Hz), which is indicative of degree of fatigue, and
- power decrease of beta waves (e.g., 13-30 Hz), which is indicative of reduction of attention.

In some embodiments, the one or more processing devices are configured to classify at least one of the following features into, for example, a type of eye tracking and type of blinking (the classification being independent from measurements different than images of eyes):
- blinking rate (a greater blinking rate is indicative of more fatigue)
- duration of pauses between eye movement, and
- latency of response of eye movement.

In some embodiments, the one or more processing devices are configured to classify at least one of the following features into, for example, one of several body postures (the classification being independent from measurements of measuring devices different than imaging devices and from images different than images of body members):
- degree of increase of forward inclination of the body,
- degree of speed of changes of the torso position, and
- degree of regularity of movements and/or of loss of stability.

In some embodiments, the one or more processing devices are configured to use a neural network comprising transformer blocks in series to process a combination of the classifications of the measurements to infer a state of the person; and wherein the signal to actuate the controllable device is generated, by the one or more processing devices, based on the output of the neural network.

The system may employ confidence scoring and anomaly detection to reduce false activations. When uncertain estimations (e.g., classifications) occur, the processing devices may cross-validate multimodal inputs (e.g., confirming facial expression cues with physiological measurements other than only images of the face) before generating an actuation signal. Cross-validating multimodal inputs refers to comparing an estimation (e.g., a classification) based on measurements of a parameter with a estimation (e.g., a classification) based on measurements of a different parameter to validate said classifications. If both estimations (e.g., classifications) match, then the classification is valid, if the classifications are different then the classifications are not valid. Additionally, thresholds can be adjusted dynamically based on context, preventing overreaction to transient human state changes.

Optionally, a combination of the classifications of the measurements and of one or more states of the person are processed by the neural network to infer the state of the person. Thereby, states of the same person (e.g., previous states of the same person) are considered by the neural network to estimate a subsequent state of the person.

The measurements/classifications and the person states are converted into numerical vectors (embeddings). The embeddings are processed by the neural network so that an output of the neural network is obtained. The generation of the signal to actuate the controllable device is based on the output of the neural network.

The use of transformer blocks to process the measurements/classifications has been found advantageous to make the system capable of making more accurate contextual inferences of the emotional, physical and cognitive state of the person in a relatively quick and accurate manner compared to other methods which combine the individual states of the person/classifications of the measurements. Thereby, enabling to generate actuation signals better adapted to the state of the person in a relatively quick manner.

In some embodiments, each transformer block comprises an attention module and a feed forward module.

In some embodiments, the attention module is a multi-head attention module.

In some embodiments, each transformer block comprises first and second modules of layer normalization, first and second dropout modules and first and second shortcut connections; wherein an output of the first module of layer normalization is connected to an input of the attention module, an output of the attention module is connected to an input of the first dropout module, the first shortcut connection combines the input of the first layer normalization with the output of the first dropout module, an input of the second module of layer normalization being configured to receive said combination; an output of the second layer normalization being connected to the input of the feed forward module, an output of the feed forward module being connected to an input of the second dropout module, and the second shortcut connection combines the input of the second module of layer normalization with the output of the second dropout layer.

In some embodiments, the feed forward module comprises a first linear layer, an activation layer and a second linear layer, wherein an output of the first linear layer is connected to an input of the activation layer, and an output of the activation layer is connected to an input of the second linear layer; wherein the activation layer is preferably a gaussian error linear unit.

In some embodiments, the neural network generates an output for each time interval based on the measurements/classification assigned to a time within the time interval. Thereby measurements or classifications of measurements of only the same time interval are used for generating each output. The time interval is, for example, of 2.0 seconds, 1.0 second or 0.5 seconds.

In some embodiments, different persons are associated with different neural networks, each neural network comprising transformer blocks in series; wherein each neural network has been trained with the measurements or the classifications obtained from the person associated with the respective neural network; and the one or more processing devices are configured to process the measurements or the classifications of each person with the neural network associated with the respective person to obtain an actuation signal of the controllable device sharing a space with the person.

In some embodiments, the system employs a personalized adaptation layer in the neural network, fine-tuning model parameters based on individual user data. The model leverages transfer learning to adapt existing pre-trained knowledge to new users, optimizing accuracy without requiring full retraining per individual.

Using a neural network trained for a specific person allows obtaining a neural network which provides better inferences of the state of that person. A reason for this is that a same measurement for two different persons may reflect a different state of the persons. The fact that the neural network has been trained with data of a specific person does not mean that the neural network has been trained with measurements of only that person. For example, in some embodiments, the neural network is pretrained with measurements of different people, and the pretrained neural network is fine-tuned with measurements of the specific person.

In some embodiments, the neural networks for different persons have the same architecture and different weights. Thereby, the different training merely affects the values of the weights of the neural network.

In some embodiments, the neural network is re-trained with measurements of the person obtained after completing a first training of the neural network and after controlling the controllable device by using the neural network obtained in the first training to generate the actuation signals. The re-training of the neural network with recent measurements allows adapting the neural network to changes in the way the specific person reflects the person status.

A second aspect of the disclosure relates to a method comprising:
A) measuring, by one or more measuring devices, parameters of a person when the person is in a space shared with a controllable device comprising an actuator, the one or more measuring devices comprising at least one of:
   - one or more physiological sensors,
   - one or more imaging devices for taking images of the person, and
   - one or more microphones for measuring voice of the person;
B) sending, from the one or more measuring devices to one or more processing devices, the measurements;
C) processing, by the one or more processing devices, the received measurements to generate a signal to actuate the controllable device based on the received measurements; and
D) repeating A), B) and C) after C).

Similar advantages as those described for the first aspect of the disclosure may also be applicable to the second aspect of the disclosure.

### BRIEF DESCRIPTION OF THE DRAWINGS

To complete the description and to provide for a better understanding of the disclosure, a set of drawings is provided. Said drawings form an integral part of the description and illustrate embodiments of the disclosure, which should not be interpreted as restricting the scope of the disclosure, but just as examples of how the disclosure can be carried out. The drawings comprise the following figures:
Figure 1 diagrammatically shows a system in accordance with embodiments.
Figure 2 shows a method in accordance with embodiments.
Figure 3 shows a transformer block in accordance with embodiments.
Figure 4 shows a feed forward module in accordance with embodiments.

### DETAILED DESCRIPTION

The following description is not to be taken in a limiting sense but is given solely for the purpose of describing the broad principles of the invention. Embodiments of the invention will be described by way of example, with reference to the above-mentioned drawings.

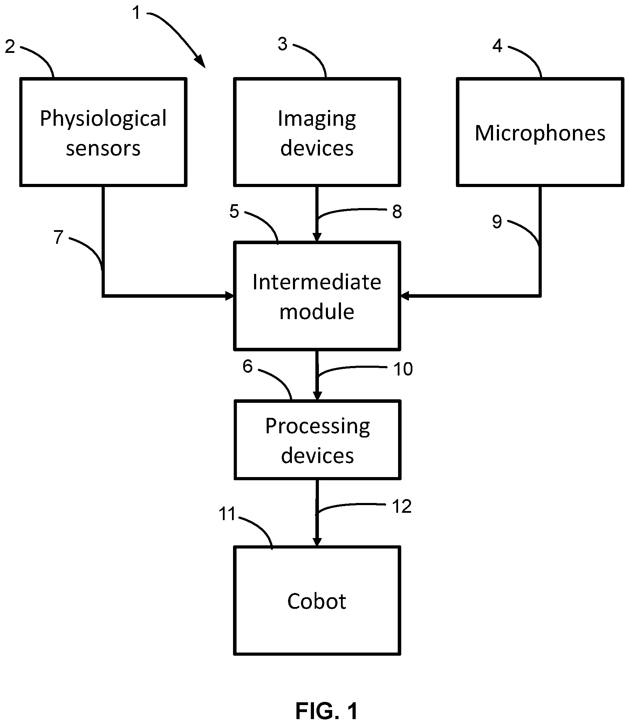

Figure 1 shows an example of a system 1 in accordance with embodiments of the present disclosure. System 1 comprises one or more measuring devices 2, 3, 4, an intermediate module 5, processing devices 6, and a controllable device, more specifically, a cobot 11. The one or more measuring devices may comprise at least one of one or more physiological sensors 2, one or more imaging devices 3 and one or more microphones 4. More specifically, the one or more measuring devices of system 1 comprises physiological sensors 2, imaging devices 3 and microphones 4.

Since the intermediate module 5 performs processing, it could have been considered to be part of the processing devices 6.

Although not depicted in figure 1, a person shares a space with the cobot 11, and the measuring devices 2, 3, 4 take measurements of the person while the person is in the space shared with the cobot 11.

The measuring devices 2, 3, 4 are communicatively coupled with the intermediate module 5. In particular, the measuring devices send measurements signals 7, 8, 9 to the intermediate module 5. The measurements signals 7, 8, 9 comprise measurements taken by the measuring devices 2, 3, 4. The intermediate module 5 preprocesses the received signals.

The preprocessed signals are subsequently processed by the processing devices 6 to obtain an actuation signal 12 of the cobot 11. The actuation signal 12 is sent to the cobot to actuate the cobot 11.

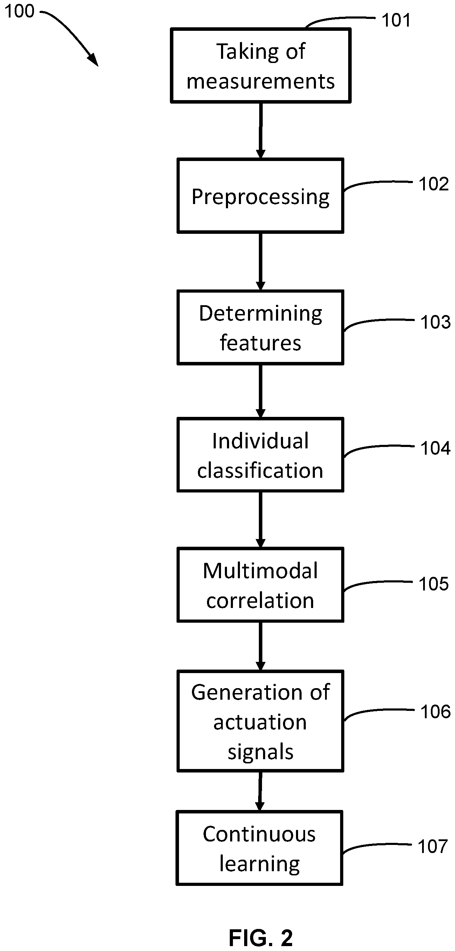

Figure 2 shows a method 100 in accordance with embodiments. The method 100 may be performed with the system 1. Although the explanation below of the method 100 and system 1 refers in some instances to the application of the method to a disassembly line, the skilled in the art understands from said description that most of the features of the method 100 and of the system 1 may be used in applications different than disassembly.

The processing devices 6 may be, for example, any combination of: CPU, GPU, FPGA, ASIC, personal computer, laptop, etc.

The physiological sensors 2 comprise an electroencephalographic sensor, a GSR sensor, a breathing sensor (e.g., a sensor which measures breathing rate, depth of inhalation of breath and/or depth of exhalation of breath) and a sensor of heart rate.

The imaging devices 3 comprise an RGB camera and a thermal camera, although for the purpose of the disassembly line the thermal camera is not required.

The RGB camera may capture images for detecting facial expressions and for detecting positions of at least some body members (e.g., at least some limbs) of the person. More specifically, since it is the arms of the person which must move to disassemble a workpiece in the shared space, the RGB camera captures images of the arms of the person.

The microphones 4 take measurements of the voice of the person.

As shown in figure 2, the measuring devices 2, 3, 4 take 101 measurements of the person. As can be deduced from the type of measuring devices, examples of the measurements are: electrogram, a measurement of galvanic skin response (e.g., a voltage), a breath rate, a heart rate, an image of the face of the person, an image of the arms of the person, a measurement of frequency of voice of the person and a measurement of volume of voice of the person.

Measurements signals comprising the measurements taken by the measuring devices 2, 3, 4 are sent to the intermediate module 5. In particular, the intermediate module 5 receives measurements signals comprising physiological measurements 7, measurements signals comprising images 8 and measurements signals comprising measurements of voice 9.

The intermediate module 5 preprocesses the received measurements signals. More specifically, the intermediate module 5 comprises modular adapters, wherein each different modular adapter is configured to preprocess the signals of a different measuring device. More specifically, the intermediate module 5 can comprise a modular adapter associated with the electroencephalographic sensor, another modular adapter associated with the GSR sensor, another modular adapter associated with the breathing sensor, another modular adapter associated with the sensor of heart rate, another modular adapter associated with the RGB camera, another modular adapter associated with the thermal camera and another modular adapter associated with the microphones.

The preprocessing 102 performed by each modular adapter comprises noise filtering, measurement normalization, and assignation of time to each measurement, the time being indicative of the time at which the respective measurement was taken by the respective measuring device, and the time being relative to a time reference shared by the adapters.

The preprocessed signals 10 are received by the processing devices 6. The processing devices 6 may determine 103 the relevant features from the received preprocessed signals.

Examples of the determined features are: power of specific bands (e.g., alpha, beta, gamma and theta) of brain waves, degree of coherence between brain channels, degree of changes of amplitude and phase of brain waves, mean level of electrical conductance of skin, change rate of electrical conductance of skin, variation of heart rate, average heart rate, breath rate, depth and regularity of breath rate, identification of position of determined parts of the face, identification of micro expressions, amplitude and speed of body movement, posture detection, fundamental frequency of voice, variation of voice tone, intensity (i.e., volume) of voice, duration of pauses in speech, voice timbre, speaking speed.

The features may be extracted by using specific techniques, e.g., analysis in domain of time, frequency and/or space, for example: using Fourier transforms, statistical analysis, models based on automatic learning and acoustic analysis.

Classifiers, which may be personalized to the particular person from whom the measurements are taken (e.g., by training the classifiers with measurements of the particular person), are run 104 by the processing devices 6 to classify the measurements (e.g., the determined features). The measurement of each parameter may be classified independently from measurements of the other parameters obtaining for example, an indication of high GSR, high breath rate, sudden movement and tense facial expression.

Thereby, the input of each one of the classifiers is one or more measurements of a same parameter, and the output of each one of the classifiers is a specific classification of the input measurement(s) of the particular parameter.

The results of the different classifiers are converted to vectors commonly known as embeddings. The embeddings are inputs of the neural network.

To obtain token embeddings, the classifications and, optionally, person states are tokenized by one or more processing devices, e.g., the one or more processing devices 6. Each token embedding is a numerical vector representing a different classification/person state or a portion of a different classification/person state. Each classification is represented by a token embedding or by several token embeddings, and each the token embedding(s) representing each classification is/are different than the token embedding(s) representing each of the rest of classifications of the measurements of the same parameter, than the token embeddings representing each of the classifications of measurements of the rest of parameters and than the token embeddings representing states of the person. For example, features of images of the body of the person may be classified as sudden movement, and the sudden movement is represented by token embedding(s) different than token embeddings of a different classification of features of images (e.g., classification as slow movement and classification of a facial expression), different than token embeddings representing every possible classification of measurements of the rest of parameters (i.e., the physiological measurements and the voice measurements) and different than token embeddings representing every possible state of a person (e.g., stress degree, confidence degree and/or degree of cognitive burden). Similarly, each person state is represented by a token embedding or by several token embeddings, and each of the token embedding(s) representing each person state is/are different than the token embeddings representing classifications and than the token embeddings representing the rest of person states.

The token embeddings are obtained, for example, by Byte Pair Encoding (BPE) tokenization or by one-hot tokenization. The number of token embeddings depends both on the number of parameters measured as well as the number of possible classifications of each parameter. In some embodiments, the number of token embeddings is greater than one hundred. In some embodiments, the number of token embeddings is smaller than one thousand.

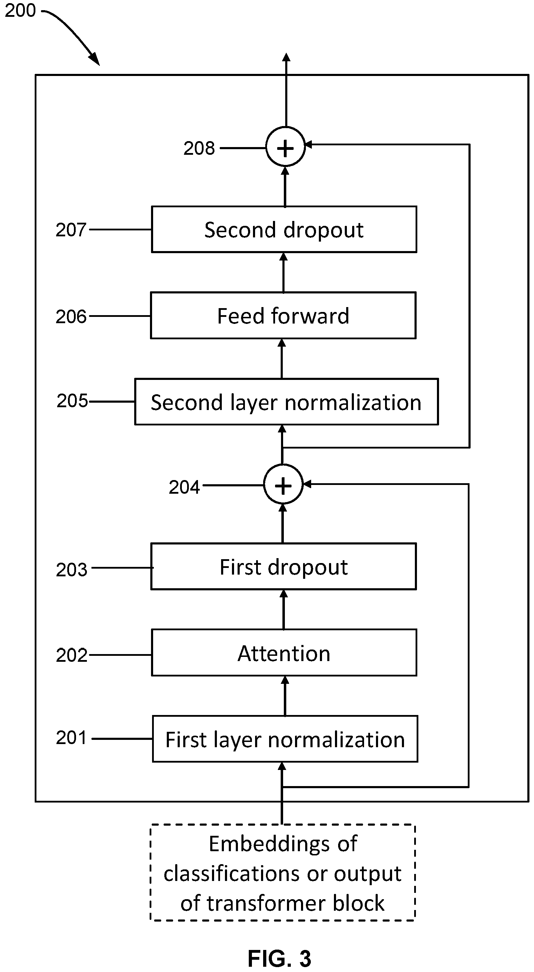

The neural network is, for example, a transformer, for example, a generative pre-trained transformer (GPT), for example, generative pre-trained transformer 2 (GPT-2). The neural network 102 comprises, for example, transformer blocks in series. An example of a transformer block 200 is shown in Figure 3.

The neural network may comprise transformer blocks 200 connected in series (i.e., the output of a transformer block is connected to the input of the subsequent transformer block). For example, the neural network may comprise between ten and thirty transformer blocks 200 connected in series.

A tensor comprising embeddings of the training data or the output of a previous transformer block 200 is input to a module of first layer normalization 201. In the first layer normalization 201, the one or more processing devices 6 adjust values of the components of the input tensor to have a mean of zero and a variance of one. This layer normalization allows enhancing the training of the neural network (e.g., contributes to minimizing the vanishing and/or exploding gradient problem). Obviously, if the transformer block 200 is the initial transformer block of the neural network (i.e., the transformer block to which embeddings of the training data are input) and the embeddings of the training data have been normalized previously, it is not required that the transformer block comprises the first layer normalization 201.

The output of the first layer normalization 201 is input to an attention module 202 (e.g., a multi-head attention module). In the attention module 202, the processing devices 6, process the input to combine an embedding (i.e., the embedding of a classification) with other embeddings representing classifications for measurements (e.g., other embeddings representing the classifications of measurements assigned to a time within a determined time interval) and optionally with other embeddings representing state(s) of the person. Thereby, the estimation of the neural network does not only depend on the value of the embedding of one classification but also in its context, in particular, on the embeddings of other classifications, for example, on all the classifications from measurements assigned a time within a determined time interval.

The first dropout module 203 and second dropout module 207 are for regularizing the model and preventing/minimizing overfitting. The first dropout module 203 and second dropout module 207 are used in the training, and, optionally, in fine-tuning, of the neural network and, in general, are not used once the neural network has been trained and/or fine-tuned. In the dropout modules 203, 207, the outputs of some neurons of the neural network are ignored. In particular, in the first dropout module 203, the outputs of some neurons of the attention module are ignored (e.g., the processing devices 6 set the weight parameters of ignored neurons of the attention module to zero). In the second dropout module 207, the outputs of some neurons of the feed forward module are ignored (e.g., the processing devices 6 set weight parameters of the ignored neurons of the feed forward module to zero).

In the module of first shortcut connection 204, the processing devices 6 sum the output of the first dropout module 203 and the input of the module of first layer normalization 201. The shortcut connections allow minimizing the problem of vanishing gradient descent which appears in deep neural networks.

Similarly to the module of first layer normalization 201, in the module of second layer normalization 205, the processing devices 6 process the input tensor to adjust the values of the tensor to have a mean of zero and a variance of one.

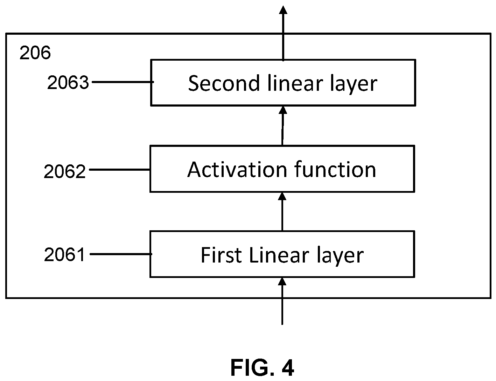

In the feed forward module 206, the processing devices 6 process the output of the second layer normalization 205 applying linear layers and an activation function. An example of a feed forward module is shown in Figure 4. The feed forward module 206 comprises a first linear layer 2061, an activation function 2062 and a second linear layer 2063. In each linear layer the processing devices 6 perform the following operation: $Y = XW + B$ where:
*Y* is a tensor output by the linear layer;
*X* is a tensor input to the linear layer;
*W* is a tensor having as components weight parameters of the linear layer; and
*B* is a bias tensor.

The tensor outputted by the first linear layer 2061 may have more components (e.g., a higher dimension) than the tensor inputted to the first linear layer 2061.

The activation function is generally a non-linear function, for example, Gaussian Error Linear Unit (GELU), Rectified linear unit (ReLU) or Swish-gated linear unit (SwiGLU). In the activation function, the processing devices 6, may process each component of the input tensor by applying the activation function 2062 to said component. Thereby, the tensor outputted by the activation function 2062 has the same dimensions as the tensor inputted to the activation function 2062.

The tensor outputted by the second linear layer 2063 may have less components (e.g., a lower dimension) than the tensor inputted to the second linear layer 2063.

In the module of second shortcut connection 208, the processing devices 6 sum the output of the second dropout and the output of the first shortcut connection 204, thereby generating the output of the transformer block 200.

The output of the transformer block 200 is the input of a subsequent transformer block, which may have the same architecture as transformer block 200, until reaching the last transformer block of the neural network. The input and output of a transformer block 200 may have the same dimensions.

The processing devices 6 are configured to select the estimated state of the person based on values of components of the tensor outputted by the last transformer block of the neural network. Said outputted tensor components are commonly known as logits in the field of machine learning. Logits are raw scores generated by the last transformer block. There is a logit associated with each token embedding (i.e., associated with the character or sequence of characters represented by the token embedding), and the value of each logit gives the probability that the state of the person of the next estimation be the state represented by the token embedding(s) associated with the respective logit. In general, higher logit values are indicative of higher probability.

In the training, since the next actual embedding of the state of the person is known, a cost function is calculated by comparing, by, e.g., the processing devices 6, the estimated embedding(s) with the actual embedding(s), and the values of weight parameters of the neural network are adjusted, by, e.g., the processing devices 6, to optimize the result of the cost function (e.g., by applying gradient descent). The cost function is, for example, ${l}_{CLM} = - {\sum }_{k = 1}^{D} log {p}_{θ} \left(\left.{ω}_{i}^{k}\right|{ω}_{< i}^{k}\right)$ wherein:
- ${p}_{θ} \left(\left.{ω}_{i}^{k}\right|{ω}_{< i}^{k}\right)$ is the probability obtained by the neural network for the actual token value ${ω}_{i}^{k}$ given the values of the tokens of the other classifications and person states inputted to the neural network;
- ${ω}_{i}^{k}$ is the actual token value in the i-th position of a k-th group of classifications and person states inputted to the neural network; and
- *D* is the total number of groups of classifications and person states used for training the neural network.

Thereby, by optimizing using the aforementioned cost function, the probability that the estimated person state matches the actual person state is increased. In this way, the neural network is trained with the training data, thus obtaining neural network trained for estimating states of a person.

The values of the weight parameters to be optimized may be the values of the weight parameters of the module of feed forward network and the values of weight parameters of the attention module.

The neural network may be subsequently fine-tuned to enhance performance of the neural network.

The devices 6 may apply a function (e.g., a softmax function) to the logits to obtain the probabilities of the estimated person state. The probability of each token embedding is given by a relationship between the value outputted by the neural network associated with the token embedding (e.g., the value of the logit associated with the token embedding) and the values, outputted by the neural network, associated with the rest of token embeddings of the possible estimated person states. The processing devices 6 base the selection of the prediction on the probabilities of the token embeddings.

For example, the processing devices 6 may be configured to assign a selection probability different to zero to all the token embeddings of states for which the calculated probability according to the values outputted by the last transformer block is not zero. Alternatively, the selection probability different than zero may be assigned only to a determined number k of token embeddings of states having the top probabilities according to the values outputted in the last transformer block (e.g., to the k logits having the top values) instead of to all the token embeddings.

Thereby, the processing devices 6 run a multimodal analysis 105 in which the vectors are input to a transformer-based model. The output of the transformer-based model is indicative of a state of the person, e.g., of the degree of confidence and stress of the person. Thereby, the results of different classifiers provide estimations of different states/classifications which are combined in the same vector which is processed in the transformer-based model.

For example, if the outputs of the individual classifiers are indication of high GSR, high breath rate, sudden movement and tense facial expression, the transformer-based model may have been trained to provide an output indicative of high stress and low confidence, so that the processing devices 6 generate 106 an actuation signal based on the high stress and low confidence. More specifically, the processing devices 6 may be configured to generate a signal to decrease the speed at which the cobot processes the workpieces (e.g., decrease the speed at which the cobot disassembles workpieces). In addition, the processing devices 6 may be configured to generate a visual signal indicative of the state of the person as estimated by the transformer-based model, so that a corrective action may be taken by the person (e.g., the person may take a break from the interaction with the cobot) to change the person state to a more appropriate state.

The measurements taken by the measuring devices may be used for re-training the transformer-based model and/or the individual classifiers. Thereby, the transformer-based model and/or the individual classifiers may be adapted to changes of behavior of the person.

In some embodiments, the neural network processes the preprocessed measurements instead of the classifications of the measurements to estimate the state of the person.

Although the detailed description only illustrates the case of the controllable device being a cobot, the skilled in the art understands that the invention is applicable to other controllable devices sharing a space with the person (e.g., a prosthetic device or a haptic interface).

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the disclosure is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A system (1) comprising:
- a controllable device (11) comprising an actuator;
- one or more measuring devices (2, 3, 4) configured to measure parameters of a person when the person is in a space shared with the controllable device (11), the one or more measuring devices comprising at least one of:
• one or more physiological sensors (2),
• one or more imaging devices (3) for taking images of the person, and
• one or more microphones (4) for measuring voice of the person;
- one or more processing devices (6); and
wherein:
- the one or more measuring devices (2, 3, 4) are communicatively coupled with the one or more processing devices (6) and are configured to send the measurements to the one or more processing devices (6); and
wherein the one or more processing devices (6) are configured to process the measurements to generate a signal (12) to actuate the actuator (11) based on the measurements.

2. The system (1) of claim 1, wherein the one or more processing devices (6) are configured to process the measurements in real time to generate the signal (12) to actuate the actuator (11) based on the measurements.

3. The system (1) of any one of claims 1 or 2, wherein the controllable device is: a collaborative robot, a prosthetic device or a haptic interface.

4. The system (1) of any one of the previous claims, wherein the one or more measuring devices (2, 3, 4) further comprise at least one of: an environmental sensor, a tactile sensor, a force sensor, a radar sensor, an ultrasonic sensor, a LiDAR sensor, and any other sensor capable of capturing parameters relevant to the state of the person or the shared space.

5. The system (1) of any one of the previous claims, wherein the one or more measuring devices comprise the one or more imaging devices; and wherein the one or more imaging devices (3) are configured to take images of the person for estimating a position of body members of the person and for estimating facial expressions of the person.

6. The system (1) of any one of the previous claims, wherein the one or more measuring devices comprise the one or more physiological sensors; and wherein the one or more physiological sensors (2) are configured to measure: a breathing parameter of the person, electrical activity of the brain of the person, an electrical parameter of skin of the person and electrical activity of skeletal muscles of the person.

7. The system (1) of any one of the previous claims, wherein the one or more measuring devices comprise the one or more physiological sensors; and wherein the one or more physiological (2) sensors comprise at least one of:
- a sensor configured to be worn in a hand palm of the person for measuring an electrical parameter of the skin; and
- a sensor configured to be worn in a scalp of the person for measuring electrical activity of the brain of the person.

8. The system (1) of any one of the previous claims, comprising an intermediate module (5) configured to:
- receive measurements signals from the measuring devices (2, 3, 4), the measurements signals comprising the measurements taken by the measuring devices,
- preprocess the received measurements signals, and
- send the preprocessed measurements signals to the one or more processing devices (6); wherein the intermediate module (5) comprises modular adapters, each modular adapter being associated with a different measuring device (2, 3, 4) and being configured to preprocess the measurements signals of the associated measuring device.

9. The system (1) of claim 8, wherein the preprocessing comprises at least one of:
- assigning a time to each measurement of the measurements signals, the time being indicative of the time at which the respective measurement was taken by the respective measuring device, and the time being relative to a time reference shared by the adapters;
- reducing noise of the measurements signals; and
- normalizing the measurements included in the measurements signals.

10. The system (1) of any one of the previous claims, wherein the one or more processing devices (6) are configured to determine features of the measurements received by the one or more processing devices (6), preferably wherein the determined features comprise power in determined bands of electroencephalography measurements.

11. The system (1) of any one of the previous claims, wherein the one or more processing devices (6) are configured to use a neural network comprising transformer blocks in series to process a combination of the measurements to infer a state of the person; and wherein the signal to actuate the controllable device (11) is generated, by the one or more processing devices (6), based on the output of the neural network.

12. The system (1) of any one of claims 1 to 10, wherein the one or more processing devices (6) are configured to classify the measurements, preferably wherein measurements of each parameter are classified independently from the rest of the parameters.

13. The system (1) of claim 12, wherein the one or more processing devices (6) are configured to use a neural network comprising transformer blocks in series to process a combination of the classifications of the measurements to infer a state of the person; and wherein the signal to actuate the controllable device (11) is generated, by the one or more processing devices (6), based on the output of the neural network.

14. The system (1) of claim 11 or 13, wherein different persons are associated with different neural networks, each neural network comprising transformer blocks in series; wherein each neural network has been trained with the measurements or the classifications obtained from the person associated with the respective neural network; and the one or more processing devices (6) are configured to process the measurements or the classifications of each person with the neural network associated with the respective person to obtain an actuation signal (12) of the controllable device (11) sharing a space with the person.

15. A method (100) comprising:
A) measuring, by one or more measuring devices (2, 3, 4), parameters of a person when the person is in a space shared with a controllable device (11) comprising an actuator, the one or more measuring devices comprising at least one of:
• one or more physiological sensors (2),
• one or more imaging devices (3) for taking images of the person, and
• one or more microphones (4) for measuring voice of the person;
B) sending, from the one or more measuring devices to one or more processing devices (6), the measurements;
C) processing, by the one or more processing devices (6), the received measurements to generate a signal (12) to actuate the controllable device (11) based on the received measurements; and
D) repeating A), B) and C) after C).
